# EUROPÄISCHE PATENTSCHRIFT

(11) **EP 3 322 909 B1**
(45) Veröffentlichungstag und Bekanntmachung des Hinweises auf die Patenterteilung: **01.05.2019**
(21) Anmeldenummer: 16766473.9
(22) Anmeldetag: 12.07.2016
(51) Int. Cl.: F16D 13/38

(54) **KUPPLUNGSMODUL FÜR EINEN ANTRIEBSSTRANG EINES KRAFTFAHRZEUGS**
COUPLING MODULE FOR A DRIVE TRAIN OF A MOTOR VEHICLE
MODULE EMBRAYAGE DESTINÉ À UN GROUPE MOTOPROPULSEUR D'UN VÉHICULE À MOTEUR

(30) Priorität: 13.07.2015 DE 102015213101
(43) Veröffentlichungstag der Anmeldung: 23.05.2018
(73) Patentinhaber: Schaeffler Technologies AG & Co. KG, 91074 Herzogenaurach (DE)
(72) Erfinder: BAUMANN, Michael, 77886 Lauf (DE); KELLER, Aurelie, 67240 Oberhoffen Sur Moder (FR); KIMMIG, Karl-Ludwig, 77883 Ottenhöfen (DE); AGNER, Ivo, 77815 Bühl (DE)
(86) Internationale Anmeldenummer: PCT/DE2016/200315
(87) Internationale Veröffentlichungsnummer: WO 2017/008803

(56) Entgegenhaltungen:
- DE-A1- 10 102 831
- DE-A1-102011 014 097
- DE-A1-102014 206 330

## Beschreibung

Die vorliegende Erfindung betrifft ein Kupplungsmodul für einen Antriebsstrang eines Kraftfahrzeugs gemäß dem Oberbegriff des Anspruchs 1.

Aus der WO 2014/026685 A1 ist ein Hybridmodul bekannt. Bei dem Hybridmodul für einen Antriebsstrang eines Kraftfahrzeugs ist eine elektrische Maschine zwischen einem Verbrennungsmotor und einem Getriebe angeordnet. Das Hybridmodul weist ein als Rotor der elektrischen Maschine ausgebildetes Rotorelement auf, dem in der Regel eine Reibungskupplung nachgeschaltet ist. Viele bekannte (trockene) Reibungskupplungen umfassen mindestens eine (Reibungs-)Kupplungseinheit mit einer Anpressplatte und einer Gegenplatte.

Aus der DE 101 02 831 A1 ist ein Kupplungsmodul gemäß dem Oberbegriff des Anspruchs 1 bekannt.

Bezüglich weiteren Standes der Technik wird auf die DE 10 2014 206 330 A1 und die DE 10 2011 014 097 A1 verwiesen.

Es ist die Aufgabe der vorliegenden Erfindung, ein kompaktes Kupplungsmodul zu schaffen, das platzsparend in einem Hybridantriebsstrang eines Kraftfahrzeugs einsetzbar ist.

Die Lösung der Aufgabe erfolgt erfindungsgemäß durch die Merkmale des unabhängigen Anspruchs. Bevorzugte Ausgestaltungen der Erfindung sind in den Unteransprüchen angegeben, die jeweils einzeln oder in Kombination einen Aspekt der Erfindung darstellen können.

In einem Hybridmodul ist vorgesehen, dass dieses Hybridmodul ein Zwischenelement aufweist, über das die Gegenplatte oder zumindest eine der Gegenplatten der Kupplungseinrichtung mit dem Rotorelement fest verbunden ist. Dabei ist zumindest eine Anpressplatte und/oder Zwischenplatte der Kupplungseinrichtung über das mindestens eine Zwischenelement drehfest, jedoch axial verschieblich mit dem Rotorelement verbunden. Es ergibt sich eine kompakte Plattenanbindung, die insbesondere für Mehrscheibenkupplungen von Vorteil ist. Das Zwischenelement ist dabei bevorzugt radial außerhalb der Platten (Anpressplatte(n), Gegenplatte(n) und gegebenenfalls Zwischenplatten) der Kupplungseinrichtung angeordnet.

Die Anbindung der zumindest einen Anpressplatte und/oder Zwischenplatte an das Zwischenelement erfolgt über zumindest eine Blattfeder.

Das Rotorelement ist bevorzugt der Rotor der elektrischen Maschine oder ein anderes von der elektrischen Maschine antreibbares Rotorelement, insbesondere eine über einen Riementrieb antreibbare Rolle.

Weitere Ausführungsformen der Erfindung sind durch die folgenden Merkmale charakterisiert.

Alternativ oder zusätzlich kann vorgesehen sein, dass die Anbindung der zumindest einen Anpressplatte und/oder Zwischenplatte an das Zwischenelement über zumindest eine Aussparungs-Eingriff-Struktur erfolgt.

Dabei kann vorgesehen sein, dass das mindestens eine Zwischenelement rohr- oder topfförmig ausgebildet ist, wobei im rohr- oder topfförmigen Zwischenelement zumindest ein Schlitz ausgebildet ist, der die Aussparung der Aussparungs-Eingriff-Struktur für den Eingriff zumindest eines Eingriff-Elements der Anpressplatte und/oder Zwischenplatte bildet.

Zwischen Aussparung und Eingriff-Element kann ein Federelement vorgesehen sein.

Es kann vorgesehen sein, dass die Kupplungseinrichtung als Mehrfachkupplung, insbesondere Doppelkupplung, mit mehreren Kupplungen ausgebildet ist.

Dabei kann vorgesehen sein, dass die Verbindung zwischen dem Rotorelement und einer der Gegenplatten als eine unmittelbare Verbindung, insbesondere als direkte Verbindung zwischen einem Rotorblech des Rotorelements und dieser Gegenplatte, realisiert ist. Die mindestens eine andere Gegenplatte ist dann über das Zwischenelement an das Rotorelement angebunden. Das Zwischenelement kann dabei (a) zwischen dem Rotorelement und der mindestens einen anderen Gegenplatte angeordnet sein oder (b) zwischen der unmittelbar mit dem Rotorelement verbundenen Gegenplatte und der mindestens einen anderen Gegenplatte.

Es kann vorgesehen sein, dass das Hybridmodul eine innerhalb des Rotorelements angeordnete Trennkupplung aufweist.

Das Hybridmodul kann eine (Funktions-)Einheit aus dem Rotorelement, der Trennkupplung und einem die zumindest eine Gegenplatte der Kupplungseinrichtung umfassenden Kupplungsteil aufweisen. Diese vormontierte Einheit kann dann in eine Gehäuseeinheit des Hybridmoduls montiert werden.

Es kann vorgesehen sein, dass das Hybridmodul weiterhin eine Ausrückvorrichtung zur Betätigung der Trennkupplung aufweist. Die Ausrückvorrichtung weist dabei bevorzugt einen Drucktopf zur Kraftübertragung von dem Ausrücklager auf die Anpressplatte der Trennkupplung sowie eine Zentralausrückereinheit mit einem Kolben für einen Kraftübertrag auf das Ausrücklager auf. Die Zentralausrückereinheit ist dabei bevorzugt eine Concentric Slave Cylinder (CSC) Einheit.

Es kann vorgesehen sein, dass das Hybridmodul ein der Trennkupplung im Antriebsstrang vorgeschaltetes Zweimassenschwungrad umfasst.

Schließlich kann das Hybridmodul bevorzugt eine motorseitige Zwischenwand aufweisen.

Ausführungsformen der Erfindung, auf die diese Erfindung aber nicht beschränkt ist und aus der sich weitere erfindungsgemäße Merkmale ergeben können, sind in den folgenden Figuren gezeigt.

Es zeigt:
- Fig.1:: ein Hybridmodul gemäß einer bevorzugten Ausführungsform der Erfindung,
- Fig.2:: ein Hybridmodul gemäß einer weiteren bevorzugten Ausführungsform der Erfindung und
- Fig.3:: die Anbindung einer Anpressplatte bzw. Zwischenplatte der Kupplungseinrichtung an ein in Fig. 2 gezeigtes rohrförmiges Zwischenelement des Hybridmoduls.

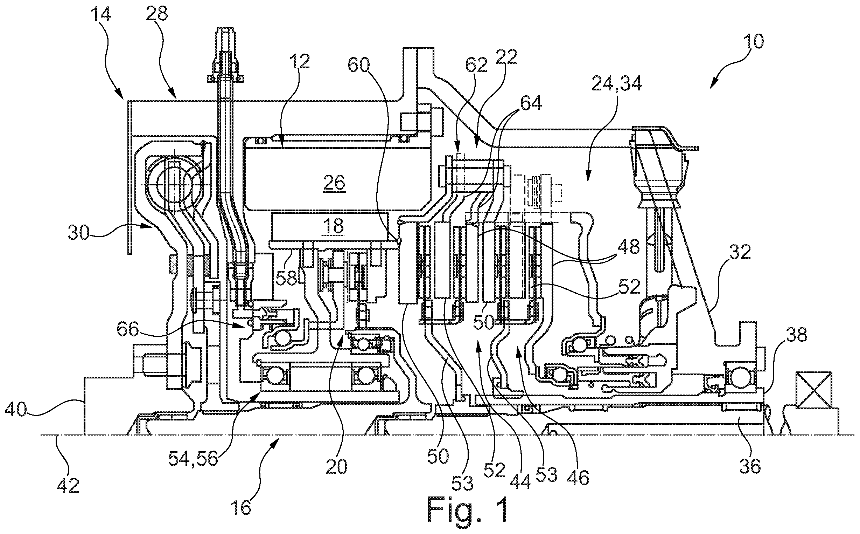

Die Fig. 1 zeigt einen Teil eines Antriebsstranges 10 eines Kraftfahrzeugs in einer Schnittdarstellung. Bei dem Antriebsstrang 10 ist eine elektrische Maschine 12 zwischen einem (nicht gezeigten) Verbrennungsmotor und einem (ebenfalls nicht gezeigten) Getriebe angeordnet. Die elektrische Maschine 12 dient als Antriebsmaschine und ist Teil eines Hybridmoduls 14. Dieses Hybridmodul 14 weist die folgenden Hauptkomponenten auf: (i) eine Funktionseinheit 16 mit einem als Rotor (Läufer) der elektrischen Maschine 12 ausgebildeten Rotorelement 18, einer innerhalb des Rotorelements 18 angeordneten K0 Trennkupplung 20 und zumindest einem mit dem Rotorelement 18 drehfest verbundenen Kupplungsteil 22 einer Kupplungseinrichtung 24, (ii) eine die Funktionseinheit 16 und einen Stator (Ständer) 26 der elektrischen Maschine 12 teilweise einhausende Gehäuseeinheit 28, (iii) ein der Trennkupplung 20 im Antriebsstrang 10 vorgeschaltetes Zweimassenschwungrad 30, sowie (iv) einem die Kupplungseinrichtung 24 einhausenden Gehäuseteil 32. Die Kupplungseinrichtung 24 ist als Doppelkupplung 34 ausgebildet. Dementsprechend ist das Getriebe als Doppelkupplungsgetriebe ausgebildet, von dem nur die beiden Getriebeeingangswellen 36, 38 dargestellt sind.

Es ergibt sich folgender Pfad des Antriebsstrangs: Abtriebswelle 40 des Verbrennungsmotors - Zweimassenschwungrad 30 - K0 Trennkupplung 20 - Rotorelement 18, also Rotor der als Innenläufer ausgebildeten elektrischen Maschine 12 - Kupplungseinrichtung 24 - Getriebeeingangswelle 36, 38. Die entsprechenden Wellen 36, 38, 40 liegen dabei auf einer gemeinsamen Achse 42, die die Hauptachse des Hybridmoduls 14 bildet.

Die als Doppelkupplung 34 ausgebildete Kupplungseinrichtung 24 weist zwei Kupplungen (Kupplungseinheiten) 44, 46 mit entsprechenden Anpressplatten 48, Gegenplatten 50, Zwischenplatten 52, Kupplungsscheiben 53 und Betätigungseinrichtungen auf.

Das Rotorelement 18 weist in seinem Inneren eine Rotorlagerung 54 auf, die als zentrale Lagereinrichtung 56 dient. Über diese Lagereinrichtung 56 ist die gesamte Funktionseinheit 16 in der Gehäuseeinheit 28 drehbar gelagert. Die drehfeste Verbindung zwischen Rotorelement 18 und Kupplungsteil 22 ist in diesem Beispiel als eine direkte Verbindung 60 zwischen einem Rotorblech 58 des Rotorelements 18 und einer der Gegenplatten 50 der Kupplungseinrichtung 24 realisiert. Zwischen den Gegenplatten 50 ergibt sich eine Verbindung über ein Zwischenelement 62. Die Anbindung der Anpressplatte 48 und der Zwischenplatte 52 an das Zwischenelement 62 erfolgt über eine jeweilige Blattfeder 64. Dies verringert den nötigen axialen Bauraum am Aussendurchmesser der Kupplungseinrichtung 24.

Das Hybridmodul 14 umfasst weiterhin eine Ausrückvorrichtung 66 zur Betätigung der Trennkupplung 20. Diese Ausrückvorrichtung 66 weist einen Drucktopf zur Kraftübertragung von dem Ausrücklager auf die Anpressplatte der Trennkupplung sowie eine Zentralausrückereinheit mit einem Kolben für einen Kraftübertrag auf das Ausrücklager auf. Die Zentralausrückereinheit ist dabei eine Concentric Slave Cylinder (CSC) Einheit.

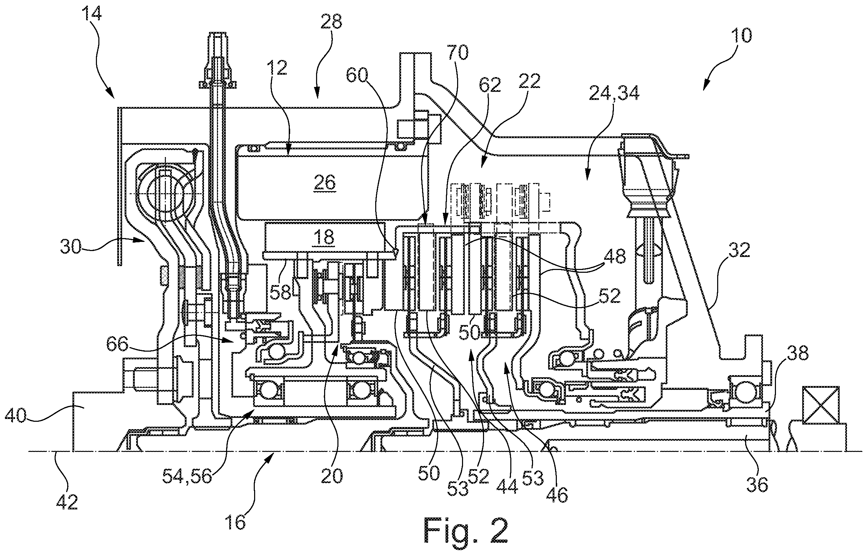

Die Fig. 2 zeigt eine weitere Ausführungsform des Hybridmoduls 14. Diese entspricht im Wesentlichen der Ausführungsform des Hybridmoduls 14 aus der Fig. 1, sodass hier nur auf die Unterschiede eingegangen wird.

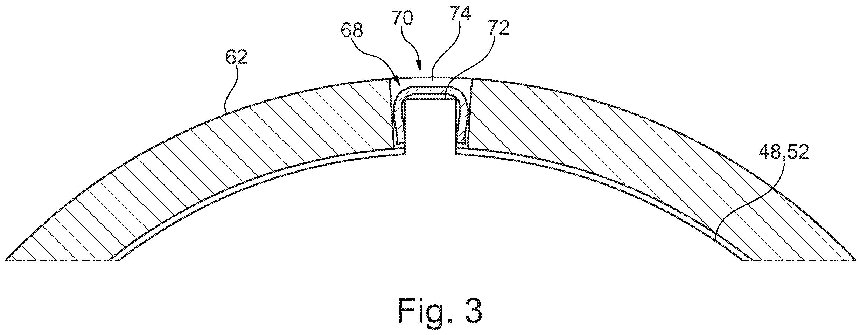

Das Zwischenelement 62 ist bei dieser Ausführungsform rohrförmig ausgebildet. Die direkt mit dem Rotorelement 18 verbundene Gegenplatte 50 und das rohrförmigen Zwischenelement 62 bilden eine topfförmige Einheit. Im rohrförmigen Zwischenelement 62 ist zumindest eine als Schlitz ausgestaltete Aussparung 68 der Aussparungs-Eingriff-Struktur 70 ausgebildet (in Fig. 3 gezeigt). Diese Aussparung 68 ermöglicht einen Eingriff zumindest eines Eingriff-Elements 72 der Anpressplatte 48 und/oder der Zwischenplatte 52. Über diesen Eingriff sind die Anpressplatten 48 und Zwischenplatten 52 der als Mehrscheibenkupplung ausgebildeten Kupplungseinrichtung 24 über das mindestens eine Zwischenelement 62 drehfest, jedoch axial verschieblich mit dem Rotorelement 18 verbunden. Die Schlitze im rohrförmigen Zwischenelement 62 ermöglichen eine axiale Bewegung und eine radiale Drehmomentübertragung.

In der Fig. 3 ist weiterhin ein zwischen Aussparung 68 und Eingriff-Element 72 angeordnetes Federelement 74 dargestellt. Störendes Klappern kann durch derartige Federelemente 74 zwischen den Anpress- und Zwischenplatten 48, 52 einerseits und den Schlitzen im rohrförmigen Zwischenelement 62 andererseits verhindern werden.

Die gezeigten Hybridmodule 14 ermöglichen eine sehr gute Bauraumausnutzung unter dem Stator 26. Die Einheit 16 mit einer solchen Kupplungseinrichtung 24 lässt sich einfach in den Stator 26 schieben.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verweisen.

### Bezugszeichenliste

- 10: Antriebsstrang
- 12: Maschine, elektrisch
- 14: Hybridmodul
- 16: Funktionseinheit
- 18: Rotorelement
- 20: Trennkupplung, K0
- 22: Kupplungsteil
- 24: Kupplungseinrichtung
- 26: Stator, elektr. Maschine
- 28: Gehäuseeinheit
- 30: Zweimassenschwungrad
- 32: Gehäuseteil (Getriebe)
- 34: Doppelkupplung
- 36: Getriebeeingangswelle, erste
- 38: Getriebeeingangswelle, zweite
- 40: Abtriebswelle
- 42: Achse
- 44: Kupplung, erste
- 46: Kupplung, zweite
- 48: Anpressplatte
- 50: Gegenplatte
- 52: Zwischenplatte
- 53: Kupplungsscheiben
- 54: Rotorlagerung
- 56: Lagereinrichtung, zentral (Funktionseinheit)
- 58: Rotorblech
- 60: Verbindung
- 62: Zwischenelement
- 64: Blattfeder
- 66: Ausrückvorrichtung
- 68: Schlitz
- 70: Aussparung-Eingriff-Struktur
- 72: Eingriff-Element
- 74: Federelement

## Patentansprüche

1. Kupplungsmodul (14) für einen Antriebsstrang (10) eines Kraftfahrzeugs, wobei das Kupplungsmodul (14) aufweist:
ein antreibbares Rotorelement (18);
eine Kupplungseinrichtung (24) mit mindestens einer eine Anpressplatte (48), eine Zwischenplatte (52) und eine Gegenplatte (50) umfassenden Kupplung (44, 46); und
ein Zwischenelement (62), mit dem mindestens eine der Anpressplatte (48) und der Zwischenplatte (52) drehfest, jedoch axial verlagerbar, verbunden ist, wobei
die Gegenplatte (50) fest mit dem Rotorelement (18) verbunden ist,
***dadurch gekennzeichnet, dass***
die Anbindung der mindestens einen der Anpressplatte (48) und der Zwischenplatte (52) an das Zwischenelement (62) über mindestens eine Blattfeder (64) erfolgt.

2. Kupplungsmodul (14) nach Anspruch 1, **dadurch gekennzeichnet, dass**
das Kupplungsmodul ein Hybridmodul für einen eine elektrische Maschine (12), einen Verbrennungsmotor und ein Getriebe aufweisenden Antriebsstrang (10) eines Kraftfahrzeugs ist, und
das Rotorelement (18) über die elektrische Maschine (12) antreibbar ist.

3. Kupplungsmodul (14) nach Anspruch 2, **dadurch gekennzeichnet, dass** die elektrische Maschine (12) in das Kupplungsmodul (14) integriert ist.

4. Kupplungsmodul (14) nach einem der Ansprüche 1 bis 3, **dadurch gekennzeichnet, dass** die Anbindung der mindestens einen der Anpressplatte (48) und der Zwischenplatte (52) an das Zwischenelement (62) über mindestens eine Aussparungs-Eingriff-Struktur (70) erfolgt.

5. Kupplungsmodul (14) nach Anspruch 4, **dadurch gekennzeichnet, dass** das Zwischenelement (62) derart rohr- oder topfförmig ausgebildet ist, dass in dem Zwischenelement (62) mindestens ein Schlitz ausgebildet ist, der die Aussparung (68) der Aussparungs-Eingriff-Struktur (70) für einen Eingriff mindestens eines Eingriff-Elements (72) mindestens einer der Anpressplatte (48) und der Zwischenplatte (52) bildet.

6. Kupplungsmodul (14) nach Anspruch 4 oder 5, **gekennzeichnet durch** ein zwischen der Aussparung (68) und dem Eingriff-Element (72) angeordnetes Federelement (74).

7. Kupplungsmodul (14) nach einem der Ansprüche 1 bis 6, **dadurch gekennzeichnet, dass** die Kupplungseinrichtung (24) als Doppelkupplung (34) mit zwei Kupplungen (44, 46) ausgebildet ist.

8. Kupplungsmodul (14) nach einem der Ansprüche 1 bis 7, **dadurch gekennzeichnet, dass** eine Verbindung zwischen dem Rotorelement (18) und der Gegenplatten (50) eine direkte Verbindung zwischen einem Rotorblech (58) des Rotorelements (18) und der Gegenplatte (50) ist.

9. Kupplungsmodul (14) nach einem der Ansprüche 1 bis 8, **gekennzeichnet durch** eine innerhalb des Rotorelements (18) angeordnete Trennkupplung (20).

10. Kupplungsmodul (14) nach Anspruch 9, **gekennzeichnet durch** ein der Trennkupplung (20) in dem Antriebsstrang (10) vorgeschaltetes Zweimassenschwungrad (30).

11. Kupplungsmodul (14) nach einem der Ansprüche 9 oder 10, **gekennzeichnet durch** eine Einheit (16) aus dem Rotorelement (18), der Trennkupplung (20) und einem die Gegenplatte (50) der Kupplungseinrichtung (24) umfassenden Kupplungsteil (22).

## Claims

1. Coupling module (14) for a drive train (10) of a motor vehicle, wherein the coupling module (14) has:
a drivable rotor element (18);
a coupling device (24) with at least one clutch (44, 46) comprising a pressure plate (48), an intermediate plate (52) and a counter plate (50); and
an intermediate element (62) which is connected rotationally fixedly but axially displaceably to at least one of the pressure plate (48) and intermediate plate (52), wherein
the counter plate (50) is fixedly connected to the rotor element (18),
**characterized in that**
the connection of the at least one of the pressure plate (48) and the intermediate plate (52) to the intermediate element (62) takes place via at least one leaf spring (64).

2. Coupling module (14) according to Claim 1, **characterized in that**
the coupling module is a hybrid module for a drive train (10) of a motor vehicle comprising an electrical machine (12), an internal combustion engine and a transmission, and
the rotor element (18) can be driven by the electrical machine (12).

3. Coupling module (14) according to Claim 2, **characterized in that** the electrical machine (12) is integrated in the coupling module (14).

4. Coupling module (14) according to any of Claims 1 to 3, **characterized in that** the connection of the at least one of the pressure plate (48) and the intermediate plate (52) to the intermediate element (62) takes place via at least one recess-engagement structure (70).

5. Coupling module (14) according to Claim 4, **characterized in that** the intermediate element (62) is formed as a tube or pot such that at least one slot is formed in the intermediate element (62), which slot forms the recess (68) of the recess-engagement structure (70) for an engagement of at least one engagement element (72) of at least one of the pressure plate (48) and the intermediate plate (52).

6. Coupling module (14) according to Claim 4 or 5, **characterized by** a spring element (74) arranged between the recess (68) and the engagement element (72).

7. Coupling module (14) according to any of Claims 1 to 6, **characterized in that** the coupling device (24) is formed as a dual clutch (34) with two clutches (44, 46).

8. Coupling module (14) according to any of Claims 1 to 7, **characterized in that** a connection between the rotor element (18) and one of the counter plates (50) is a direct connection between a rotor core (58) of the rotor element (18) and the counter plate (50).

9. Coupling module (14) according to any of Claims 1 to 8, **characterized by** a separating clutch (20) arranged inside the rotor element (18).

10. Coupling module (14) according to Claim 9, **characterized by** a dual mass flywheel (30) arranged in the drive train (10) upstream of the separating clutch (20).

11. Coupling module (14) according to one of Claims 9 or 10, **characterized by** a unit (16) of the rotor element (18), the separating clutch (20) and a coupling part (22) comprising the counter plate (50) of the coupling device (24).

## Revendications

1. Module d'embrayage (14) pour une chaîne cinématique (10) d'un véhicule automobile, dans lequel le module d'embrayage (14) présente
un élément de rotor (18) pouvant être entraîné;
un dispositif d'embrayage (24) avec au moins un embrayage (44, 46) comprenant une plaque de pression (48), une plaque intermédiaire (52) et une plaque opposée (50); et
un élément intermédiaire (62), auquel au moins une de la plaque de pression (48) et de la plaque intermédiaire (52) est assemblée de façon calée en rotation mais déplaçable axialement, dans lequel
la plaque opposée (50) est assemblée de façon solidaire à l'élément de rotor (18),
**caractérisé en ce que**
la liaison de ladite au moins une de la plaque de pression (48) et de la plaque intermédiaire (52) à l'élément intermédiaire (62) est réalisée au moyen d'au moins un ressort à lame (64).

2. Module d'embrayage (14) selon la revendication 1,
**caractérisé en ce que** le module d'embrayage est un module hybride pour une chaîne cinématique (10) d'un véhicule automobile, présentant une machine électrique (12), un moteur à combustion interne et une boîte de vitesses, et l'élément de rotor (18) peut être entraîné par la machine électrique (12).

3. Module d'embrayage (14) selon la revendication 2,
**caractérisé en ce que** la machine électrique (12) est intégrée dans le module d'embrayage (14).

4. Module d'embrayage (14) selon l'une quelconque des revendications 1 à 3, **caractérisé en ce que** la liaison de ladite au moins une de la plaque de pression (48) et de la plaque intermédiaire (52) à l'élément intermédiaire (62) est réalisée au moyen d'au moins une structure à tenon-mortaise (70).

5. Module d'embrayage (14) selon la revendication 4,
**caractérisé en ce que** l'élément intermédiaire (62) est réalisé en forme de tube ou de pot, de telle manière qu'il se forme dans l'élément intermédiaire (62) au moins une fente, qui forme la mortaise (68) de la structure à tenon-mortaise (70) pour un engagement d'au moins un élément de tenon (72) d'au moins une de la plaque de pression (48) et de la plaque intermédiaire (52).

6. Module d'embrayage (14) selon une revendication 4 ou 5, **caractérisé par** un élément de ressort (74) disposé entre la mortaise (68) et l'élément de tenon (72).

7. Module d'embrayage (14) selon l'une quelconque des revendications 1 à 6, **caractérisé en ce que** le dispositif d'embrayage (24) est constitué par un embrayage double (34) avec deux embrayages (44, 46).

8. Module d'embrayage (14) selon l'une quelconque des revendications 1 à 7, **caractérisé en ce qu'**une liaison entre l'élément de rotor (18) et la plaque opposée (50) est une liaison directe entre une tôle de rotor (58) de l'élément de rotor (18) et la plaque opposée (50).

9. Module d'embrayage (14) selon l'une quelconque des revendications 1 à 8, **caractérisé par** un embrayage de séparation (20) disposé à l'intérieur de l'élément de rotor (18).

10. Module d'embrayage (14) selon la revendication 9,
**caractérisé par** un volant d'inertie à deux masses (30) placé avant l'embrayage de séparation (20) dans la chaîne cinématique (10).

11. Module d'embrayage (14) selon une des revendications 9 ou 10, **caractérisé par** une unité (16) composée de l'élément de rotor (18), de l'embrayage de séparation (20) et d'une partie d'embrayage (22) comprenant la plaque opposée (50) du dispositif d'embrayage (24).
